# EUROPEAN PATENT SPECIFICATION

(11) **EP 3 402 307 B1**
(45) Date of publication and mention of the grant of the patent: **09.10.2019**
(21) Application number: 16888786.7
(22) Date of filing: 04.02.2016
(51) Int. Cl.: H04W 88/06, H04W 28/02, H04W 80/02, H04W 76/10, H04W 76/27

(54) **METHOD, PROTOCOL STACK, TERMINAL, AND NETWORK DEVICE FOR ESTABLISHING COMMUNICATION LINK**
VERFAHREN, PROTOKOLLSTAPEL, ENDGERÄT UND NETZWERKVORRICHTUNG ZUR HERSTELLUNG EINER KOMMUNIKATIONSVERBINDUNG
PROCÉDÉ, PILE DE PROTOCOLES, TERMINAL ET DISPOSITIF DE RÉSEAU POUR ÉTABLIR UNE LIAISON DE COMMUNICATION

(43) Date of publication of application: 14.11.2018
(73) Proprietor: Huawei Technologies Co., Ltd., Longgang District Shenzhen, Guangdong 518129 (CN)
(72) Inventor: MA, Jie, Shenzhen Guangdong 518129 (CN); LIN, Bo, Shenzhen Guangdong 518129 (CN)
(74) Representative: Pfenning, Meinig & Partner mbB
(86) International application number: PCT/CN2016/073565
(87) International publication number: WO 2017/132961

(56) References cited:
- EP-A1- 2 835 937
- EP-A2- 2 645 787
- CN-A- 101 686 428
- CN-A- 102 685 249
- CN-A- 104 363 557
- CN-Y- 201 294 640
- US-A1- 2014 269 488

## Description

### TECHNICAL FIELD

The present invention relates to the wireless communications field, and in particular, to communication link establishment methods and a smart wearable device.

### BACKGROUND

With vigorous development of wearable equipment (Wearable equipment, WE), the wearable equipment is widely applied in people's daily life. The wearable equipment may upload data obtained by the wearable equipment to a network device by using a relay device, so that the network device can provide a service for the wearable equipment. For example, the data obtained by the wearable equipment includes physiological data of a wearer obtained by the wearable equipment. The relay device may be an intelligent mobile terminal of the wearer of the wearable equipment. The wearable equipment may also be used as a convenient portable communication tool, to provide the wearer with services such as SMS message receiving, time checking, and location positioning. For example, the wearable equipment includes smart glasses, a smart band, a smartwatch, smart shoes, and the like.

In the prior art, wearable equipment cannot directly communicate with a network device in a cellular network in consideration of characteristics of the wearable equipment, to be specific, a small size, a small battery capacity, and low power consumption. The wearable equipment needs to use a relay device to communicate with the network device in the cellular network. In a process in which the wearable equipment uses the relay device to communicate with the network device in the cellular network, the wearable equipment sends a packet to the relay device, and the relay device performs parsing processing on the packet at an application (Application, APP) layer to generate a new packet, and sends the packet newly generated at the APP layer to the network device.

Based on the prior art, the network device can identify that the received packet is sent by the relay device, but cannot identify that the packet sent by the relay device is sent by the wearable equipment. As a result, the network device cannot directly manage the wearable equipment and cannot provide a value-added service for the wearable equipment. In addition, the prior art has a security risk. For example, a listener may listen to a process in which the wearable equipment negotiates with the relay device about a key used for packet transmission. The listener may use the key obtained through listening to crack the packet transmitted between the wearable equipment and the relay device, causing a security risk to the packet. For another example, in a process in which the wearable equipment sends the packet to the APP layer of the relay device and the APP layer parses the packet to generate the new packet, a malicious program may exist inside the relay device to obtain the packet. This also causes a security risk to the packet.

EP 2 835 937 A1 proposes a relay node supporting WLAN access of a user equipment to converge WLAN with 3GPP network. Further prior art useful for understanding the current invention is described in EP 2 645 787 A1 and US 2014/0269488 A1.

### SUMMARY

Embodiments of the present invention provide communication link establishment methods, and a smart wearable device according to the independent claims, to establish a communication link between the smart wearable device and a network device, so that the network device can directly manage the smart wearable device, and a security risk is reduced in a process in which the smart wearable device communicates with the network device by using a relay device.

According to a first aspect, an embodiment of the present invention provides a communication link establishment method of claim 1.

According to a second aspect, an embodiment of the present invention provides a communication link establishment method according to claim 4.

According to a third aspect, an embodiment of the present invention provides a smart wearable device according to claim 6.

### BRIEF DESCRIPTION OF DRAWINGS

FIG. 1a is a schematic structural diagram of a user plane protocol stack according to an embodiment of the present invention;
FIG. 1b is a schematic structural diagram of a control plane protocol stack according to an embodiment of the present invention;
FIG. 2a is a schematic structural diagram of an adaptation layer in a first terminal protocol stack according to an embodiment of the present invention;
FIG. 2b is a schematic structural diagram of an adaptation layer in a second terminal protocol stack according to an embodiment of the present invention;
FIG. 3 is a schematic flowchart of a communication link establishment method according to an embodiment of the present invention;
FIG. 4 is a schematic flowchart of a network connection determining method according to an embodiment of the present invention;
FIG. 5 is a schematic flowchart of a communication link establishment method according to an embodiment of the present invention;
FIG. 6 is a schematic flowchart of a communication link establishment method according to an embodiment of the present invention;
FIG. 7 is a schematic flowchart of a communication link establishment method according to an embodiment of the present invention;
FIG. 8 is a schematic structural diagram of a first terminal according to an embodiment of the present invention;
FIG. 9 is a schematic structural diagram of a network device according to an embodiment of the present invention;
FIG. 10 is a schematic structural diagram of a second terminal according to an embodiment of the present invention;
FIG. 11 is a schematic structural diagram of a network connection determining apparatus according to an embodiment of the present invention;
FIG. 12 is a schematic structural diagram of a network connection determining apparatus according to an embodiment of the present invention;
FIG. 13 is a schematic structural diagram of a first terminal according to an embodiment of the present invention;
FIG. 14 is a schematic structural diagram of a network device according to an embodiment of the present invention; and
FIG. 15 is a schematic structural diagram of a second terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

The embodiments of the present invention provide communication link establishment methods and a smart wearable device, to establish a communication link between wearable equipment and a network device, so that the network device can directly manage the wearable equipment, and a security risk is reduced in a process in which the wearable equipment communicates with the network device by using a relay device. The method and the apparatus are conceived based on a same invention. The method and the apparatus have similar principles for resolving the problems. Therefore, for implementation of the apparatus and the method, reference may be made to each other, and details of repeated parts are not described.

Technical solutions provided in the embodiments of the present invention are applicable to a Long Term Evolution (Long Term Evolution, LTE) system. In the technical solutions provided in the embodiments of the present invention, a security communication link is established between a first terminal and a network device, the first terminal communicates with the network device by using a second terminal, and the network device can directly manage the first terminal.

The first terminal includes wearable equipment, also referred to as remote equipment. The wearable equipment includes smart glasses, a smart band, a smartwatch, smart shoes, and the like. The second terminal includes a relay device, for example, an intelligent mobile terminal such as a mobile phone. The network device includes a device in a cellular network connected to the second terminal. Specifically, the network device may be a base station. The first terminal establishes a connection to the network device by using the second terminal. The first terminal connects to the second terminal through a communication link that is based on a Bluetooth Low Energy (Blue tooth low energy, BLE) protocol or a Wireless Fidelity (Wireless Fidelity, WIFI) protocol. The second terminal connects to the network device in the cellular network.

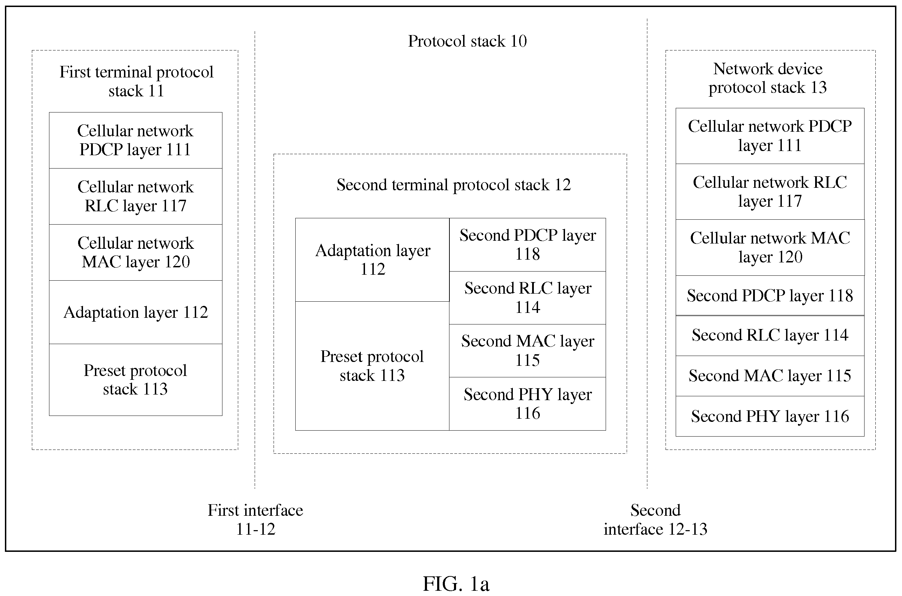

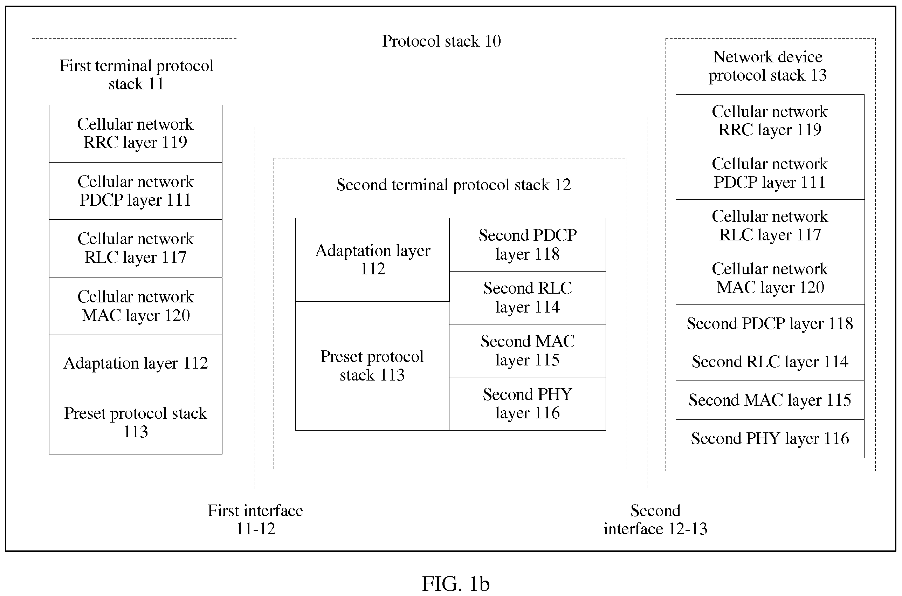

The technical solutions provided in the embodiments of the present invention are based on protocol stacks shown in FIG. 1a and FIG. 1b. FIG. 1a shows a user plane protocol stack, and FIG. 1b shows a control plane protocol stack. Protocol stacks 10 shown in FIG. 1a and FIG. 1b are applied to a system in which a first terminal connects to a network device by using a second terminal.

A user plane protocol stack 10 in FIG. 1a includes a first terminal protocol stack 11, a second terminal protocol stack 12, and a network device protocol stack 13.

The first terminal protocol stack 11 includes a cellular network Packet Data Convergence Protocol (Packet Data Convergence Protocol, PDCP) layer 111, an adaptation layer 112, and a preset protocol stack 113 that are successively arranged from an upper layer to a bottom layer. The preset protocol stack 113 is based on a Bluetooth protocol or a WiFi protocol. The adaptation layer 112 is configured to implement a function of converting a packet between a preset-protocol-based packet and a cellular network packet and a function of configuring parameter information of the preset protocol stack 113.

If the first terminal transmits a packet with the second terminal through a Bluetooth-protocol-based communication link, the preset protocol stack 113 is based on the Bluetooth protocol, and the preset protocol stack 113 has a Logical Link Control and Adaptation Protocol (Logical Link Control and Adaptation Protocol, L2CAP) layer and a first PHY layer that are successively arranged from an upper layer to a bottom layer.

If the first terminal transmits a packet with the second terminal through a WiFi-protocol-based communication link, the preset protocol stack 113 is based on the WiFi protocol, and the preset protocol stack 113 has a first MAC layer and a first PHY layer that are successively arranged from an upper layer to a bottom layer.

The second terminal protocol stack 12 includes a protocol stack on a first interface 11-12 side between the second terminal and the first terminal, and a protocol stack on a second interface 12-13 side between the second terminal and the network device. A first interface 11-12 is an E-PC5-Bluetooth interface or an E-PC5-WiFi interface, and a second interface 12-13 is a Uu interface.

The protocol stack on the first interface 11-12 side includes an adaptation layer 112 and a preset protocol stack 113 that are successively arranged from an upper layer to a bottom layer and that are peering to the first terminal protocol stack 11.

The adaptation layer 112 in the protocol stack on the first interface 11-12 side is configured to implement a function of converting a packet between a preset-protocol-based packet and a cellular network packet and a function of configuring parameter information of the preset protocol stack 113.

The protocol stack on the second interface 12-13 side includes a second Radio Link Control (Radio Link Control, RLC) layer 114, a second Media Access Control (Media Access Control, MAC) layer 115, and a second physical (Physical, PHY) layer 116 that are successively arranged from an upper layer to a bottom layer. The adaptation layer 112 in the protocol stack on the first interface 11-12 side is further configured to implement a function of transmitting a packet with the second RLC layer 114 in the protocol stack on the second interface 12-13 side.

The network device protocol stack 13 includes a cellular network PDCP layer 111 that is peering to the first terminal protocol stack 11 and a second RLC layer 114, a second MAC layer 115, and a second PHY layer 116 that are peering to the protocol stack on the second interface 12-13 side, where the cellular network PDCP layer 111, the second RLC layer 114, the second MAC layer 115, and the second PHY layer 116 are successively arranged from an upper layer to a bottom layer. The cellular network PDCP layer 111 is configured to implement a function of packet security processing negotiated between the first terminal and the network device. The second terminal transmits a packet with the network device through a cellular network communication link.

Optionally, a cellular network RLC layer 117 is arranged between the cellular network PDCP layer 111 and the adaptation layer 112 in the first terminal protocol stack 11.

A cellular network RLC layer 117 that is peering to the first terminal protocol stack 11 is arranged below the cellular network PDCP layer 111 in the network side protocol stack.

Optionally, a second PDCP layer 118 is arranged above the second RLC layer 114 of the second terminal protocol stack 12.

A second PDCP layer 118 that is peering to the second terminal protocol stack 12 is arranged between the cellular network PDCP layer 111 and the second RLC layer 114 of the network device protocol stack 13.

The second PDCP layer 118 is configured to implement a function of packet security processing negotiated between the second terminal and the network device.

Optionally, the adaptation layer 112 in the protocol stack on the first interface 11-12 side is further configured to implement a function of transmitting a packet with the second PDCP layer 118 in the protocol stack on the second interface 12-13 side.

Optionally, a cellular network MAC layer 120 is arranged below the cellular network PDCP layer 111 in the first protocol stack 11.

A cellular network MAC layer 120 that is peering to the first protocol stack 11 is arranged below the cellular network PDCP layer 111 of the network device protocol stack 13.

By using the user plane protocol stack shown in FIG. 1a, for uplink transmitted data, the first terminal performs security processing at the cellular network PDCP layer on a packet sent from a cellular network module, and sends the packet to the network device by using the second terminal; for downlink transmitted data, the network device performs security processing at the cellular network PDCP layer on a packet sent from a core network, and sends the packet to the first terminal by using the second terminal.

A control plane protocol stack 10 shown in FIG. 1b includes a first terminal protocol stack 11, a second terminal protocol stack 12, and a network device protocol stack 13. As shown in FIG. 1b, the control plane protocol stack 10 shown in FIG. 1b has the following content added on basis of the user plane protocol stack 10 shown in FIG. 1a.

A cellular network radio resource control (Radio Resource Control, RRC) layer 119 is arranged above the cellular network PDCP layer 111 of the first terminal protocol stack 11. A cellular network RRC layer 119 that is peering to the first terminal protocol stack 11 is arranged above the cellular network PDCP layer 111 of the network device protocol stack 13.

The cellular network RRC layer 119 is configured to manage parameter settings used by the first terminal to connect to the network device, configure security parameters for transmitting a packet and signaling between the first terminal and the network device, and configure a bearer of the first terminal. The bearer of the first terminal includes a radio bearer from the first terminal to the network device and a bearer from the network device to the core network.

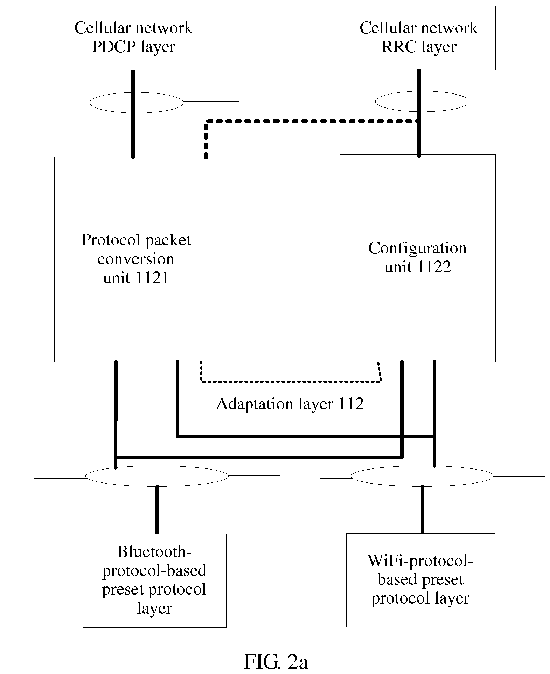

The adaptation layer 112 in the first terminal protocol stack is divided based on the functions implemented by the adaptation layer 112. As shown in FIG. 2a, the adaptation layer 112 includes a protocol packet conversion unit 1121 and a configuration unit 1122.

The protocol packet conversion unit 1121 is configured to implement a function of converting a packet between a Bluetooth protocol-based packet and a cellular network packet (namely, a cellular-network-protocol-based packet), or converting a packet between a WiFi-protocol-based packet and a cellular network packet. Specifically, based on the Bluetooth protocol or WiFi protocol, the protocol packet conversion unit 1121 performs byte order conversion on a packet and/or adds or deletes some header content of a packet. For uplink transmitted data, the protocol packet conversion unit 1121 converts a cellular network packet generated by the cellular network module into a Bluetooth-protocol-based or WiFi-protocol-based packet, so that the first terminal further sends the packet obtained through conversion to the second terminal. For downlink transmitted data, the protocol packet conversion unit 1121 converts a Bluetooth-protocol-based or WiFi-protocol-based packet from the second terminal into a cellular network packet, and transfers the packet to the cellular network module for further processing. A protocol layer of the cellular network module includes at least the cellular network RRC layer and/or the cellular network PDCP layer.

The configuration unit 1122 is configured to implement a function of configuring parameter information of the preset protocol stack 113, and may be further configured to implement a function of performing quality of service (Quality of Service, QoS) class mapping on a packet of a radio bearer. The configuration unit 1122 is configured to configure, based on bearer configuration information of a cellular network, parameters of the protocol layers in the Bluetooth-protocol-based or WiFi-protocol-based preset protocol stack 113.

The radio bearer configuration information of the cellular network generally includes configuration parameters of the cellular network RLC layer and/or the cellular network MAC layer. These configuration parameters are used to ensure reliable transmitted data at a transmit end and a receive end of a protocol and to ensure a specific data transmission rate.

For example, a correspondence between the bearer configuration information of the cellular network and configuration information under the Bluetooth protocol is as follows:

When the cellular network RLC layer is configured in an acknowledge mode (acknowledge mode, AM), the L2CAP layer in the Bluetooth-protocol-based preset protocol stack should be configured in a mode with an acknowledgment from a receive end; when the cellular network MAC layer has a guaranteed bit rate (Guaranteed Bit Rate, PBR) configured, a quantity of channels configured under the Bluetooth protocol should meet a value of the PBR.

The bearer configuration information of the cellular network includes a QoS class identifier (QoS Class Identifier, QCI). The QCI value is corresponding to a data transmission rate and a data transmission mode (including an acknowledged transmission mode, a retransmission mode, and an unacknowledged transmission mode) under the Bluetooth protocol. A quantity of channels at the L2CAP layer, a maximum packet value, a quantity of retransmission times, and the like are configured based on the QCI.

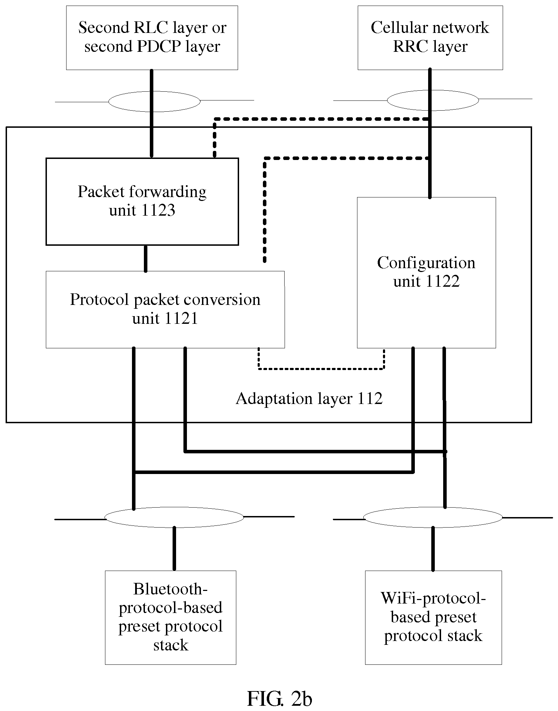

The adaptation layer 112 in the protocol stack on the first interface side of the second terminal protocol stack is divided based on the functions implemented by the adaptation layer 112. As shown in FIG. 2b, the adaptation layer 112 includes a protocol packet conversion unit 1121, a configuration unit 1122, and a packet forwarding unit 1123.

A difference between the adaptation layer 112 shown in FIG. 2b and the adaptation layer 112 shown in FIG. 2a lies in that: The packet forwarding unit 1123 is added to the adaptation layer 112 shown in FIG. 2b. The packet forwarding unit 1123 is configured to implement a function of transmitting a packet between the adaptation layer 112 and the second RLC layer or the second PDCP layer. For an uplink transmitted packet, the protocol packet conversion unit 1121 converts a Bluetooth-protocol-based or WiFi-protocol-based packet sent from the first terminal into a cellular network packet, and the packet forwarding unit 1123 transfers the cellular network packet to the second RLC layer or the second PDCP layer, so that the second terminal further sends the cellular network packet to the network device. For a downlink transmitted packet, the packet forwarding unit 1123 receives a cellular network packet from the second RLC layer or the second PDCP layer, and transfers the cellular network packet to the protocol packet conversion unit 1121, and the protocol packet conversion unit 1121 converts the cellular network packet into a Bluetooth-protocol-based or WiFi-protocol-based packet, so that the second terminal further sends the Bluetooth-protocol-based or WiFi-protocol-based packet to the first terminal.

It should be noted that, the adaptation layer in the protocol stack provided in the embodiments of the present invention may be an independent entity, to implement a function of the adaptation layer. Alternatively, another existing protocol layer may be configured to implement the function of the adaptation layer. For example, the cellular network RRC layer is configured to implement a function of the configuration unit 1122 of the adaptation layer, and the cellular network PDCP layer is configured to implement functions of the protocol packet conversion unit 1121 and the packet forwarding unit 1123.

With the protocol stack provided in the embodiments of the present invention, a security communication link can be established between the first terminal and the network device, so that the network device can directly manage the first terminal.

With reference to the protocol stack provided in the embodiments of the present invention, the following describes in detail a communication link establishment method provided in an embodiment of the present invention.

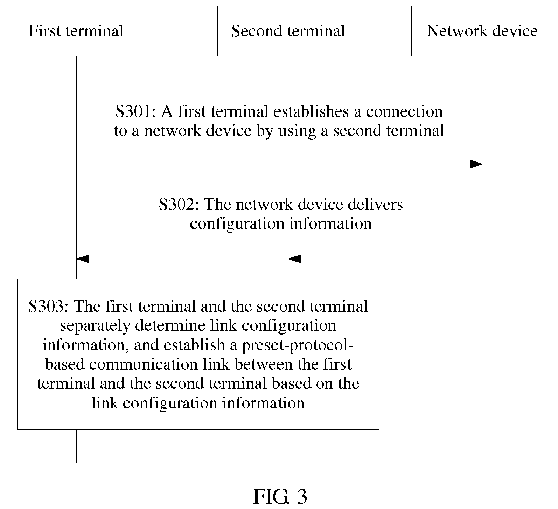

As shown in FIG. 3, an embodiment of the present invention provides a communication link establishment method. The method is executed between a first terminal, a second terminal, and a network device. The method includes the following steps.

S301: The first terminal establishes a connection to the network device by using the second terminal.

A cellular network communication link has been established between the second terminal and the network device.

S302: The network device delivers configuration information.

The configuration information delivered by the network device is used to determine link configuration information of the first terminal and that of the second terminal. The link configuration information is used to establish a preset-protocol-based communication link between the first terminal and the second terminal. The preset protocol is a Bluetooth protocol or a WiFi protocol.

S303: The first terminal and the second terminal separately determine link configuration information, and establish a preset-protocol-based communication link between the first terminal and the second terminal based on the link configuration information.

The preset-protocol-based communication link and the cellular network communication link are jointly used by the first terminal to transmit a packet with the network device by using the second terminal. In a process in which the first terminal transmits a packet with the network device by using the second terminal, the first terminal and the second terminal both have a packet conversion function, and the packet conversion function is to convert the transmitted packet between a preset-protocol-based packet and a cellular network packet.

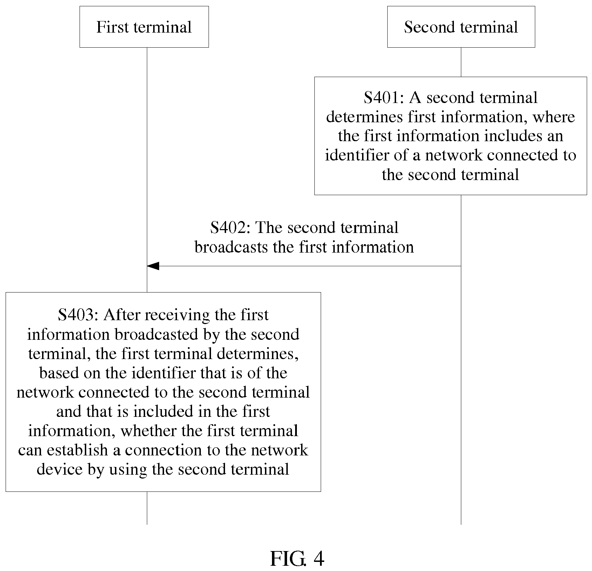

In S301 in this embodiment of the present invention, the first terminal establishes a connection to the network device by using the second terminal. An embodiment of the present invention further provides a network connection determining method. As shown in FIG. 4, an interaction process between the first terminal, the second terminal, and the network device is as follows:

S401: The second terminal determines first information, where the first information includes an identifier of a network connected to the second terminal.

The identifier of the network connected to the second terminal is used by the first terminal to determine whether the first terminal can establish a connection to the network device by using the second terminal. The network device is a device in the network connected to the second terminal.

Optionally, the first information includes at least one or a combination of the following:
a public land mobile network (Public Lands Mobile Network, PLMN) identifier, a cell identifier (cell ID), a device identifier, and an Internet Protocol (Internet Protocol, IP) address of a base station.

The PLMN identifier is an identifier of a cellular network connected to the second terminal, for example, China Mobile. The cell identifier is an identifier of a cell on which the second terminal currently camps or an identifier of a cell serving the second terminal. The device identifier is an identifier allocated to the second terminal by a network device (a base station or a core network device) in the cellular network connected to the second terminal. This identifier is used to indicate that the second terminal may be used as a relay device. The IP address of a base station is an IP address of a base station in the cellular network connected to the second terminal.

The second terminal determines the first information by receiving third information sent by the network device. The third information includes at least the identifier of the network connected to the second terminal. A packet format of the third information is based on a cellular network protocol. The third information may include some or all information included in the first information. The second terminal converts the third information sent from the network device into the first information by using an adaptation layer. A packet format of the first information is based on the Bluetooth protocol or the WiFi protocol.

Optionally, the second terminal obtains the third information by receiving an RRC message broadcast by the network device. The RRC message broadcast by the network device includes the third information.

S402: The second terminal broadcasts the first information.

If the second terminal broadcasts the first information through a Bluetooth broadcast channel, after obtaining Bluetooth-protocol-based first information through conversion, the adaptation layer of a second terminal protocol stack transfers the first information to an L2CAP layer in a Bluetooth-protocol-based preset protocol stack, and instructs to send the first information through a Bluetooth broadcast channel.

Optionally, the L2CAP layer in the Bluetooth-protocol-based preset protocol stack periodically sends the first information. By default, a period of the Bluetooth-protocol-based preset protocol stack may be defined to periodically send the first information, or the adaptation layer may be used to instruct the L2CAP layer in the Bluetooth-protocol-based preset protocol stack to periodically send the first information.

If the second terminal broadcasts the first information through a WiFi broadcast channel, after obtaining WiFi-protocol-based first information through conversion, the adaptation layer of the second terminal protocol stack transfers the first information to a first MAC layer in a WiFi-protocol-based preset protocol stack, and instructs the first MAC layer to use a traffic indication map (Traffic Indication Map, TIM) field in a beacon (Beacon) frame to send the first information.

All bits in an association identifier (Association ID) in the TIM field are set to 1. Content sent in the TIM field is referred to as a frame buffered by a base station. The frame buffered by the base station is periodically sent. A receive end of the frame buffered by the base station is a WiFi receive end corresponding to an association ID that has all its bits set to 1, to be specific, the first terminal in this embodiment of the present invention. Setting all bits in the association ID to 1 indicates that all first terminals inside a range covered by WiFi signals of the second terminal serving a relay device can receive the first information sent over the TIM field.

S403: After receiving the first information broadcast by the second terminal, the first terminal determines, based on the identifier that is of the network connected to the second terminal and that is included in the first information, whether the first terminal can establish a connection to the network device by using the second terminal.

A cellular network RRC layer of the first terminal initiates a network searching mode based on a bottom layer protocol (including the Bluetooth protocol or the WiFi protocol) of a module of the first terminal, so that the first information broadcast by the second terminal is received through a Bluetooth-protocol-based broadcast channel or a WiFi-protocol-based broadcast channel. There are two network searching modes: One is to search for a relay device used by the first terminal to connect to the network device, namely, the second terminal; the other is to search for broadcast information of the cellular network. In consideration of a low power consumption characteristic of the first terminal and a fact that a relay device usually exists around the first terminal, preferably, the first terminal first searches for the relay device used by the first terminal to connect to the network device. If the first terminal fails to find an available relay device after a period of time, the first terminal searches for the broadcast information of the cellular network.

The cellular network RRC layer of the first terminal initiates the network searching mode, to instruct the Bluetooth-protocol-based or WiFi-protocol-based preset protocol stack to receive the first information broadcast by the second terminal. The packet format of the first information is based on the Bluetooth protocol or the Wireless Fidelity WiFi protocol. The first terminal converts the first information into second information by using an adaptation layer. A packet format of the second information is based on the cellular network protocol. The adaptation layer transfers the second information to the cellular network RRC layer to obtain, through parsing, the identifier of the network connected to the second terminal.

When the identifier of the network connected to the second terminal is consistent with an identifier of a network to which the first terminal subscribes, the first terminal determines that the first terminal can establish a connection to the network device by using the second terminal. The network device is a device in the network connected to the second terminal.

When the identifier of the network connected to the second terminal is inconsistent with the identifier of the network to which the first terminal subscribes, the first terminal determines that the first terminal cannot establish a connection to the network device by using the second terminal.

Optionally, after the first terminal determines that the first terminal can establish a connection to the network device by using the second terminal, the first terminal sends a request message to the network device by using the second terminal. The request message is used by the first terminal to request to establish or maintain a connection to the network device.

For S302 and S303 in this embodiment of the present invention, S302 includes the configuration information delivered by the network device; S303 includes the link configuration information determined by the first terminal and that determined by the second terminal. The following four methods may be used to establish the preset-protocol-based communication link between the first terminal and the second terminal based on the link configuration information.

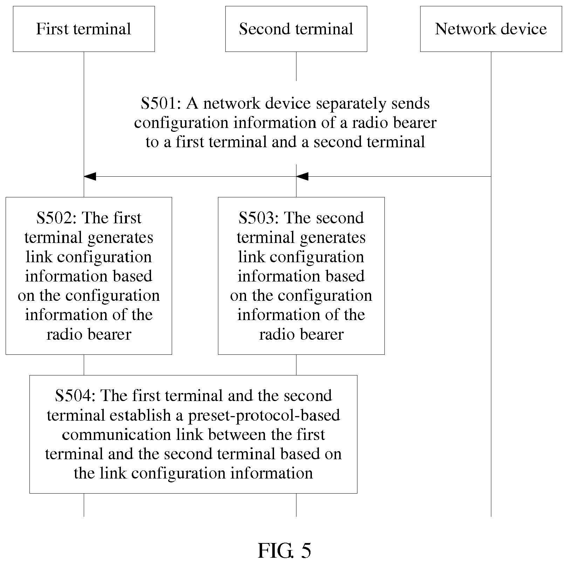

Method 1: As shown in FIG. 5, an interaction process between the first terminal, the second terminal, and the network device is as follows:
S501: The network device separately sends configuration information of a radio bearer to the first terminal and the second terminal.
   The radio bearer is a radio bearer between the first terminal and the network device.
S502: The first terminal generates the link configuration information based on the configuration information of the radio bearer.
S503: The second terminal generates the link configuration information based on the configuration information of the radio bearer.
   It should be noted that, an execution sequence of S502 and S503 is not limited in this embodiment of the present invention.
S504: The first terminal and the second terminal establish the preset-protocol-based communication link between the first terminal and the second terminal based on the link configuration information.

For establishment of a Bluetooth-protocol-based communication link between the first terminal and the second terminal, the adaptation layer establishes the Bluetooth-protocol-based communication link between the first terminal and the second terminal based on the configuration information of the radio bearer. Specifically, the adaptation layer maps a QoS parameter of the radio bearer to a QoS parameter of the Bluetooth protocol, and generates the link configuration information, including configuration parameters of a Bluetooth-protocol-based preset protocol stack, namely, a configuration parameter of an L2CAP layer and a configuration parameter of a first PHY layer. The adaptation layer sends the configuration parameter of the L2CAP layer and the configuration parameter of the first PHY layer to the Bluetooth-protocol-based preset protocol stack. In this way, based on the configuration parameter of the L2CAP layer and the configuration parameter of the first PHY layer, the Bluetooth-protocol-based preset protocol stack can set parameters of the L2CAP layer and a first PHY layer that are inside the Bluetooth-protocol-based preset protocol stack. After the first terminal and the second terminal both have their Bluetooth-protocol-based preset protocol stacks configured, the Bluetooth-protocol-based communication link can be established between the first terminal and the second terminal. Subsequently, the Bluetooth-protocol-based communication link and the cellular network communication link between the second terminal and the network device can be used, and the first terminal can transmit a packet with the network device by using the second terminal.

The adaptation layer establishes the Bluetooth-protocol-based communication link between the first terminal and the second terminal based on the configuration information of the radio bearer. In this way, a radio bearer between the first terminal and the network device can one-to-one correspond to a channel at the L2CAP layer, or all radio bearers between the first terminal and the network device can correspond to one channel at the L2CAP layer. A change made to the Bluetooth protocol in this embodiment is as follows: A protocol indication is added in Protocol/Service Multiplexer (Protocol/Service Multiplexer, PSM) to point to the adaptation layer. The adaptation layer of the second terminal further needs to configure a mapping and forwarding function between a channel at the L2CAP layer and a cellular module, including a mapping relationship between an identifier of a radio bearer and a channel identifier (channel identification, CID), and a function of adding header information to and deleting header information from a packet to be forwarded by the second terminal, so that the second terminal can forward a packet of the first terminal to the network device.

For establishment of a WiFi-protocol-based communication link between the first terminal and the second terminal, the adaptation layer establishes the WiFi-protocol-based communication link between the first terminal and the second terminal based on the configuration information of the radio bearer. Specifically, the adaptation layer generates the link configuration information based on QoS parameters of the radio bearer, including configuration parameters of a Bluetooth-protocol-based preset protocol stack, namely, a configuration parameter of a first MAC layer and a configuration parameter of a first PHY layer. The adaptation layer sends the configuration parameter of the first MAC layer and the configuration parameter of the first PHY layer to the WiFi-protocol-based preset protocol stack. In this way, based on the configuration parameter of the first MAC layer and the configuration parameter of the first PHY layer, the WiFi-protocol-based preset protocol stack can set parameters of a first MAC layer and a first PHY layer that are inside the WiFi-protocol-based preset protocol stack. After the first terminal and the second terminal both have their WiFi-protocol-based preset protocol stacks configured, the WiFi-protocol-based communication link can be established between the first terminal and the second terminal. Subsequently, the WiFi-protocol-based communication link and the cellular network communication link between the second terminal and the network device can be used, and the first terminal can transmit a packet with the network device by using the second terminal.

A concept of traffic flow does not exist in a process of transmitting a packet through the WiFi-protocol-based communication link. Therefore, QoS classes of radio bearers instead of traffic flows need to be differentiated between the first terminal and the second terminal. The adaptation layer combines packets of radio bearers of a same QoS class to send to the first MAC layer. The adaptation layer is configured to implement a function of performing QoS class mapping on a packet of a radio bearer. For example, if a cellular network PDCP layer already adds an identifier of the first terminal and an identifier of a radio bearer to a packet of the radio bearer, the adaptation layer is configured to implement only a function of performing QoS class mapping on the packet of the radio bearer; or if the cellular network PDCP layer does not add the identifier of the first terminal and the identifier of the radio bearer to the packet of the radio bearer, the adaptation layer is configured to implement the function of performing QoS class mapping on the packet of the radio bearer, and is further configured to implement a function of adding the identifier of the first terminal and the identifier of the radio bearer to the packet of the radio bearer. The adaptation layer of the second terminal is further configured to implement a mapping and forwarding function between a cellular network module and the WiFi-protocol-based preset protocol stack.

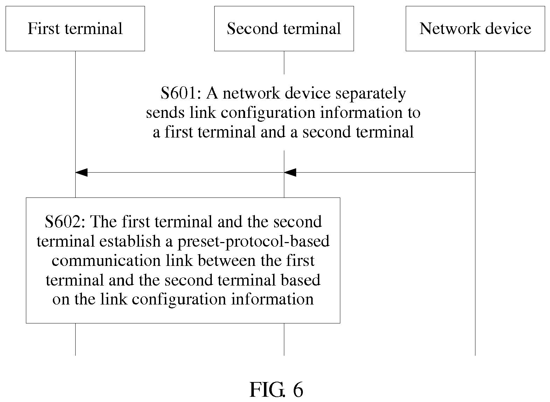

Method 2: As shown in FIG. 6, an interaction process between the first terminal, the second terminal, and the network device is as follows:
S601: The network device separately sends the link configuration information to the first terminal and the second terminal.
S602: The first terminal and the second terminal establish the preset-protocol-based communication link between the first terminal and the second terminal based on the link configuration information.

The method shown in FIG. 6 includes establishing a Bluetooth-protocol-based communication link between the first terminal and the second terminal or establishing a WiFi-protocol-based communication link between the first terminal and the second terminal. A difference between the communication link establishment method shown in FIG. 6 and that shown in FIG. 5 lies in the following:

For establishment of a Bluetooth-protocol-based communication link between the first terminal and the second terminal, the network device generates the link configuration information based on configuration information of a radio bearer. The link configuration information is used to establish the Bluetooth-protocol-based communication link between the first terminal and the second terminal. To be specific, the network device generates the link configuration information based on QoS parameters of the radio bearer, including configuration parameters of a Bluetooth-protocol-based preset protocol stack, namely, a configuration parameter of an L2CAP layer and a configuration parameter of a first PHY layer. The network device sends the configuration parameter of the L2CAP layer and the configuration parameter of the first PHY layer to the first terminal and the second terminal. In this way, based on the configuration parameter of the L2CAP layer and the configuration parameter of the first PHY layer, the Bluetooth-protocol-based preset protocol stack in each of the first terminal and the second terminal sets parameters of the L2CAP layer and a first PHY layer that are inside the Bluetooth-protocol-based preset protocol stack. After the first terminal and the second terminal both have their Bluetooth-protocol-based preset protocol stacks configured, the Bluetooth-protocol-based communication link can be established between the first terminal and the second terminal. Subsequently, the Bluetooth-protocol-based communication link and the cellular network communication link between the second terminal and the network device can be used, and the first terminal can transmit a packet with the network device by using the second terminal.

For establishment of a WiFi-protocol-based communication link between the first terminal and the second terminal, the network device generates the link configuration information based on configuration information of a radio bearer. The link configuration information is used to establish the WiFi-protocol-based communication link between the first terminal and the second terminal. To be specific, the network device generates the link configuration information based on QoS parameters of the radio bearer, including configuration parameters of a WiFi-protocol-based preset protocol stack, namely, a configuration parameter of a first MAC layer and a configuration parameter of a first PHY layer. The network device sends the configuration parameter of the first MAC layer and the configuration parameter of the first PHY layer to the WiFi-protocol-based preset protocol stack. In this way, based on the configuration parameter of the first MAC layer and the configuration parameter of the first PHY layer, the WiFi-protocol-based preset protocol stack in each of the first terminal and the second terminal sets parameters of a first MAC layer and a first PHY layer that are inside the WiFi-protocol-based preset protocol stack. After the first terminal and the second terminal both have their WiFi-protocol-based preset protocol stacks configured, the WiFi-protocol-based communication link can be established between the first terminal and the second terminal. Subsequently, the WiFi-protocol-based communication link and the cellular network communication link between the second terminal and the network device can be used, and the first terminal can transmit a packet with the network device by using the second terminal.

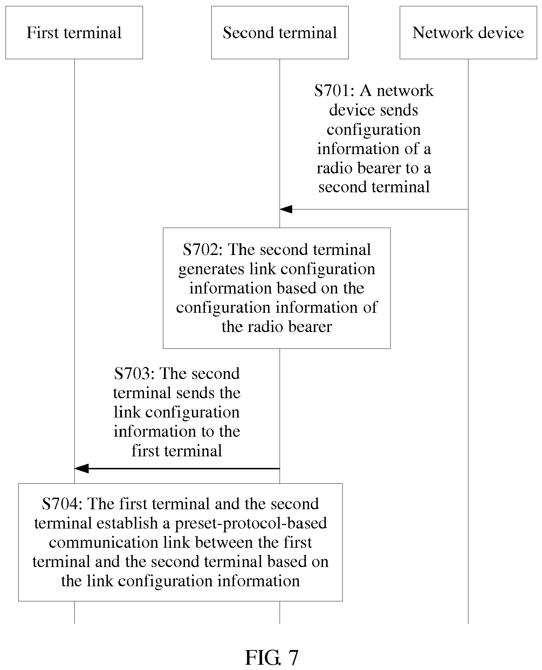

Method 3: As shown in FIG. 7, an interaction process between the first terminal, the second terminal, and the network device is as follows:
S701: The network device sends configuration information of a radio bearer to the second terminal.
   The radio bearer is a radio bearer between the first terminal and the network device.
S702: The second terminal generates the link configuration information based on the configuration information of the radio bearer.
S703: The second terminal sends the link configuration information to the first terminal.
S704: The first terminal and the second terminal establish the preset-protocol-based communication link between the first terminal and the second terminal based on the link configuration information.

The method shown in FIG. 7 includes establishing a Bluetooth-protocol-based communication link between the first terminal and the second terminal or establishing a WiFi-protocol-based communication link between the first terminal and second terminal. A difference between the communication link establishment method shown in FIG. 7 and those shown in FIG. 5 and FIG. 6 lies in the following:

The network device sends the configuration information of the radio bearer to the second terminal, so that the second terminal generates the link configuration information. The second terminal sends the link configuration information to the first terminal, and the first terminal and the second terminal further set their own preset protocol stacks based on the link configuration information, including the Bluetooth-protocol-based preset protocol stack or the WiFi-protocol-based preset protocol stack. After the first terminal and the second terminal both have their own WiFi-protocol-based preset protocol stacks configured, the preset-protocol-based communication link can be established between the first terminal and the second terminal. A specific process is similar to that in FIG. 5 or FIG. 6, and details are not described herein again.

Method 4: When the first terminal establishes a connection to the network device by using the second terminal, the first terminal and the second terminal learn, by receiving an RRC message broadcast by the network device, that a cellular network system of the network device is an LTE system, and generate preconfigured information. The adaptation layer generates the link configuration information based on the preconfigured information, and sends the link configuration information to the preset protocol stack, including the Bluetooth-protocol-based preset protocol stack or the WiFi-protocol-based preset protocol stack. The preset protocol stack sets parameters of protocol layers inside the preset protocol stack based on the link configuration information. After the first terminal and the second terminal both have their own WiFi-protocol-based preset protocol stacks configured, the preset-protocol-based communication link can be established between the first terminal and the second terminal. A specific process is similar to those in FIG. 5 to FIG. 7, and details are not described herein again.

The preconfigured information may include any least one or a combination of the following:
initial bearer configuration information: including configuration information of the cellular network RCL layer and configuration information of the cellular network MAC layer, where the adaptation layer may generate the configuration parameters of the protocol layers in the preset protocol stack based on the initial bearer configuration information;
initial link configuration information and configuration parameters of the L2CAP layer that are in the Bluetooth protocol: for example, a data transmission mode, a maximum packet length, and a quantity of channels at the first PHY layer;
configuration parameters in the WiFi protocol: for example, a transmit power level and a length of a listening window; and
transmission quality reference values in the cellular network, including a link rate, a maximum packet transmission delay, and the like, for example, transmission quality reference values listed in the following Table 1.

**Table 1**

| **QCI** | **Data rate** | **Maximum packet transmission delay** |
|---|---|---|
| 0 | 20 kbps | 300 ms |
| 1 | 32 kbps | 200 ms |
| 2 | 64 kbps | 200 ms |
| 3 | 128 kbps | 200 ms |
| 4 | 512 kbps | 100 ms |
| 5 | 1024 kbps | 100 ms |
| 6 | 2048 kbps | 100 ms |
| 7 | 2048 kbps | 50 ms |

In this embodiment of the present invention, the preset-protocol-based communication link (the communication link between the first terminal and the second terminal) and the cellular network communication link (the communication link between the second terminal and the network device) are jointly used by the first terminal to transmit a packet with the network device by using the second terminal. In a process in which the first terminal transmits a packet with the network device by using the second terminal, the first terminal and the second terminal both have a packet conversion function. The packet conversion function is to convert the transmitted packet between a preset-protocol-based packet and a cellular network packet.

With reference to the protocol stack provided in this embodiment of the present invention, the following describes in detail the process in which the first terminal transmits a packet with the network device by using the second terminal. The process in which the first terminal transmits a packet with the network device by using the second terminal is as follows:

A process of transmitting an uplink packet includes:
A cellular network packet generated by a cellular network module of the first terminal passes through the PDCP layer of the cellular network for security processing and then is transferred to the adaptation layer. The adaptation layer converts the cellular network packet into a preset-protocol-based packet. In correspondence to the Bluetooth-protocol-based communication link or the WiFi-protocol-based communication link between the first terminal and the second terminal, the preset-protocol-based packet includes a Bluetooth-protocol-based packet or a WiFi-protocol-based packet. The adaptation layer transfers the Bluetooth-protocol-based packet to the L2CAP layer of the Bluetooth-protocol-based preset protocol stack, and the L2CAP layer sends the Bluetooth-protocol-based packet to the L2CAP layer of the second terminal. Alternatively, the adaptation layer transfers the WiFi-protocol-based packet to the first MAC layer of the WiFi-protocol-based preset protocol stack, and the first MAC layer sends the WiFi-protocol-based packet to the first MAC layer of the second terminal.

After receiving the Bluetooth-protocol-based packet, the L2CAP layer of the second terminal transfers the Bluetooth-protocol-based packet to the adaptation layer; the adaptation layer converts the Bluetooth-protocol-based packet into a cellular network packet and transfers the cellular network packet to the second PDCP layer; the second PDCP layer sends the cellular network packet to the second PDCP layer of the network device by using a Uu interface between the second terminal and the network device; the network device performs further processing on the cellular network packet inside the network device. In this way, the first terminal sends an uplink packet to the network device by using the second terminal. Alternatively, after receiving the WiFi-protocol-based packet, the first MAC layer of the second terminal transfers the WiFi-protocol-based packet to the adaptation layer; the adaptation layer converts the WiFi-protocol-based packet into a cellular network packet and transfers the cellular network packet to the second PDCP layer; the second PDCP layer sends the cellular network packet to the second PDCP layer of the network device by using a Uu interface between the second terminal and the network device; the network device performs further processing on the cellular network packet inside the network device. In this way, the first terminal sends an uplink packet to the network device by using the second terminal.

A process of transmitting a downlink packet is inversed to the process of transmitting an uplink packet, and includes:
A cellular network packet generated by a cellular network module of the network device passes through the cellular network PDCP layer for security processing and is transferred to the second PDCP layer, and the second PDCP layer sends the cellular network packet to the second PDCP layer of the second terminal by using a Uu interface between the second terminal and the network device.

After receiving the cellular network packet, the second PDCP layer of the second terminal transfers the cellular network packet to the adaptation layer, and the adaptation layer converts the cellular network packet into a preset-protocol-based packet. In correspondence to the Bluetooth-protocol-based communication link or the WiFi-protocol-based communication link between the first terminal and the second terminal, the preset-protocol-based packet includes a Bluetooth-protocol-based packet or a WiFi-protocol-based packet. The adaptation layer transfers the Bluetooth-protocol-based packet to the L2CAP layer of the Bluetooth-protocol-based preset protocol stack, and the L2CAP layer sends the Bluetooth-protocol-based packet to the L2CAP layer of the first terminal. Alternatively, the adaptation layer transfers the WiFi-protocol-based packet to the first MAC layer of the WiFi-protocol-based preset protocol stack, and the first MAC layer sends the WiFi-protocol-based packet to the first MAC layer of the first terminal.

After receiving the Bluetooth-protocol-based packet, the L2CAP layer of the first terminal transfers the Bluetooth-protocol-based packet to the adaptation layer; the adaptation layer converts the Bluetooth-protocol-based packet into the cellular network packet; the first terminal performs further processing on the cellular network packet inside the first terminal. In this way, the network device sends a downlink packet to the first terminal by using the second terminal. Alternatively, after receiving the WiFi-protocol-based packet, the first MAC layer of the first terminal transfers the WiFi-protocol-based packet to the adaptation layer; the adaptation layer converts the WiFi-protocol-based packet into the cellular network packet; the first terminal performs further processing on the cellular network packet inside the first terminal. In this way, the network device sends a downlink packet to the first terminal by using the second terminal.

The embodiments of the present invention provide the protocol stack and the communication link establishment method, to establish a security connection between the first terminal and the network device, so that the network device can directly manage the first terminal, for example, the network device can provide a value-added service for the first terminal. The Bluetooth-protocol-based or WiFi-protocol-based communication link between the first terminal and the second terminal can avoid a prior-art process of generating a new packet during packet forwarding by the second terminal, thereby reducing a security risk in a packet transmission process.

For a core network, the protocol stack provided in the embodiments of the present invention is equivalent to that the first terminal directly connects to a base station in the network device by using a Uu interface. This can maintain compatibility of the core network. In addition, the network device directly manages the first terminal, and the network device stores information such as a context of the first terminal. Even if a connection between the first terminal and the second terminal is interrupted due to a factor such as a long distance from the second terminal serving as a relay device to the first terminal, the network device can quickly recover a service data transmission capability, thereby reducing complexity of a mobility processing flow, and further reducing a delay.

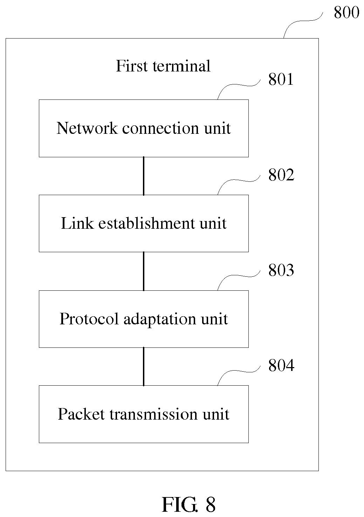

Based on the foregoing embodiments, an embodiment of the present invention further provides a first terminal. The first terminal may use the method provided in the embodiment corresponding to the first terminal in FIG. 3. Referring to FIG. 8, a first terminal 800 includes a network connection unit 801, a link establishment unit 802, and a protocol adaptation unit 803, and optionally, further includes a packet transmission unit 804.

The network connection unit 801 is configured to establish a connection between the first terminal and a network device by using a second terminal, where a cellular network communication link has been established between the second terminal and the network device.

The link establishment unit 802 is configured to, after the network connection unit 801 establishes a connection between the first terminal and the network device by using the second terminal, determine link configuration information, and establish, based on the link configuration information, a preset-protocol-based communication link between the first terminal and the second terminal.

The preset protocol is a Bluetooth protocol or a Wireless Fidelity WiFi protocol. The preset-protocol-based communication link and the cellular network communication link are jointly used by the first terminal to transmit a packet with the network device by using the second terminal.

The protocol adaptation unit 803 is configured to, after the link establishment unit 802 establishes the preset-protocol-based communication link between the first terminal and the second terminal, in a process in which the first terminal transmits a packet with the network device by using the second terminal, convert the transmitted packet between a preset-protocol-based packet and a cellular network packet, and transfer the packet inside the first terminal.

Optionally, when determining the link configuration information, the link establishment unit 802 is specifically configured to:
receive configuration information that is of a radio bearer and that is sent by the network device, and generate the link configuration information based on the configuration information of the radio bearer, where the radio bearer is a radio bearer between the first terminal and the network device; or
receive the link configuration information sent by the network device; or
receive the link configuration information sent by the second terminal; or
generate the link configuration information based on preconfigured information.

Optionally, the first terminal 800 further includes:
the packet transmission unit 804, configured to transmit a packet with the network device by using the second terminal.

Optionally, the packet transmission unit 804 is specifically configured to:
convert a cellular network packet generated by a cellular network module into a preset-protocol-based packet; and
send the preset-protocol-based packet to the second terminal through the preset-protocol-based communication link, so that after converting the received preset-protocol-based packet into the cellular network packet, the second terminal sends the cellular network packet to the network device through the cellular network communication link.

Optionally, the packet transmission unit 804 is specifically configured to:
receive a preset-protocol-based packet of the second terminal through the preset-protocol-based communication link, where the preset-protocol-based packet is obtained by the second terminal by converting a cellular network packet, and the cellular network packet is sent by the network device to the second terminal through the cellular network communication link; and
convert the preset-protocol-based packet into the cellular network packet, and transfer the cellular network packet to the cellular network module for processing.

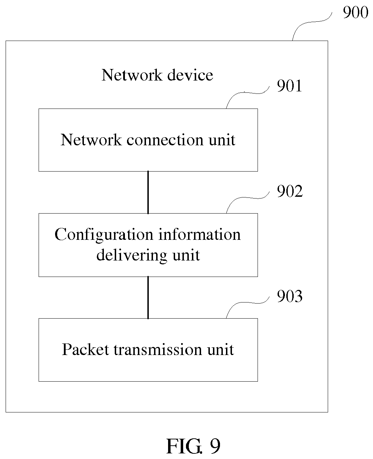

Based on the foregoing embodiments, an embodiment of the present invention further provides a network device. The network device may use the method provided in the embodiment corresponding to the network device in FIG. 3. Referring to FIG. 9, a network device 900 includes a network connection unit 901 and a configuration information delivering unit 902, and optionally, further includes a packet transmission unit 903.

The network connection unit 901 is configured to establish a connection between the network device and a first terminal by using a second terminal, where a cellular network communication link has been established between the second terminal and the network device.

The configuration information delivering unit 902 is configured to deliver configuration information after the network connection unit 901 establishes a connection between the network device and the first terminal by using the second terminal, where the configuration information is used to establish a preset-protocol-based communication link between the first terminal and the second terminal.

The preset protocol is a Bluetooth protocol or a Wireless Fidelity WiFi protocol. The preset-protocol-based communication link and the cellular network communication link are jointly used by the first terminal to transmit a packet with the network device by using the second terminal. In a process in which the first terminal transmits a packet with the network device by using the second terminal, the first terminal and the second terminal both have a packet conversion function, and the packet conversion function is to convert the transmitted packet between a preset-protocol-based packet and a cellular network packet.

Optionally, the network connection unit 901 is specifically configured to:
receive, by using the second terminal, a request message sent by the first terminal, where the request message is used by the first terminal to request to establish a connection to the network device.

Optionally, the configuration information delivering unit 902 is specifically configured to:
send configuration information of a radio bearer separately to the first terminal and the second terminal, where the configuration information of the radio bearer is used to generate link configuration information, the link configuration information is used to establish the preset-protocol-based communication link between the first terminal and the second terminal, and the radio bearer is a radio bearer between the first terminal and the network device; or
send configuration information of a radio bearer to the second terminal, where the configuration information of the radio bearer is used to generate link configuration information, the link configuration information is used to establish the preset-protocol-based communication link between the first terminal and the second terminal, and the radio bearer is a radio bearer between the first terminal and the network device; or
send link configuration information separately to the first terminal and the second terminal, where the link configuration information is used to establish the preset-protocol-based communication link between the first terminal and the second terminal.

Optionally, the network device 900 further includes:
the packet transmission unit 903, configured to transmit a packet with the first terminal by using the second terminal.

Optionally, the packet transmission unit 903 is specifically configured to:
receive, through the cellular network communication link, a cellular network packet sent by the second terminal, where the cellular network packet is obtained by the second terminal by converting a preset-protocol-based packet, and the preset-protocol-based packet is sent by the first terminal to the second terminal through the preset-protocol-based communication link; and/or
send a cellular network packet to the second terminal through the cellular network communication link, so that the second terminal converts the received cellular network packet into a preset-protocol-based packet, and sends the preset-protocol-based packet to the first terminal through the preset-protocol-based communication link.

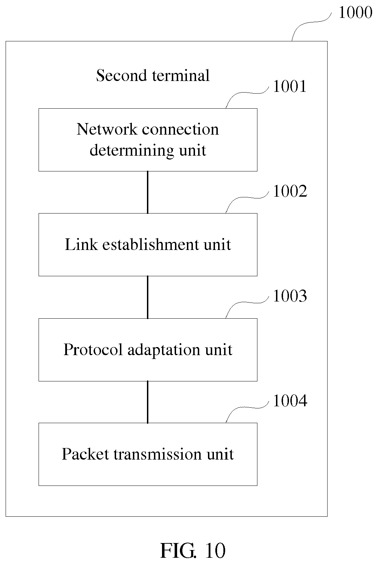

Based on the foregoing embodiments, an embodiment of the present invention further provides a second terminal. The second terminal may use the method provided in the embodiment corresponding to the second terminal in FIG. 3. Referring to FIG. 10, a second terminal 1000 includes a network connection determining unit 1001, a link establishment unit 1002, and a protocol adaptation unit 1003, and optionally, further includes a packet transmission unit 1004.

The network connection determining unit 1001 is configured to determine that a first terminal establishes a connection to a network device, where a cellular network communication link has been established between the second terminal and the network device.

The link establishment unit 1002 is configured to, after the network connection determining unit 1001 determines that the first terminal establishes a connection to the network device, determine link configuration information, and establish, based on the link configuration information, a preset-protocol-based communication link between the first terminal and the second terminal.

The preset protocol is a Bluetooth protocol or a Wireless Fidelity WiFi protocol. The preset-protocol-based communication link and the cellular network communication link are jointly used by the first terminal to transmit a packet with the network device by using the second terminal.

The protocol adaptation unit 1003 is configured to, after the link establishment unit 1002 establishes the preset-protocol-based communication link between the second terminal and the first terminal, in a process in which the first terminal transmits a packet with the network device by using the second terminal, convert the transmitted packet between a preset-protocol-based packet and a cellular network packet, and transfer the packet inside the second terminal.

Optionally, when determining the link configuration information, the link establishment unit 1002 is specifically configured to:
receive the link configuration information sent by the network device.

Optionally, when determining the link configuration information, the link establishment unit 1002 is specifically configured to:
receive configuration information that is of a radio bearer and that is sent by the network device, and generate the link configuration information based on the configuration information of the radio bearer, where the radio bearer is a radio bearer between the first terminal and the network device.

Optionally, the link establishment unit 1002 is further configured to:
send the link configuration information to the first terminal.

Optionally, the second terminal 1000 further includes:
a first packet transmission unit 1004, configured to, in the process in which the first terminal transmits a packet with the network device by using the second terminal, receive, through the preset-protocol-based communication link, a preset-protocol-based packet sent by the first terminal; and convert the preset-protocol-based packet into a cellular network packet, and send the cellular network packet to the network device through the cellular network communication link.

Optionally, the second terminal 1000 further includes:
a second packet transmission unit 1004, configured to, in the process in which the first terminal transmits a packet with the network device by using the second terminal, receive, through the cellular network communication link, a cellular network packet sent by the network device; and convert the cellular network packet into a preset-protocol-based packet, and send the preset-protocol-based packet to the first terminal through the preset-protocol-based communication link.

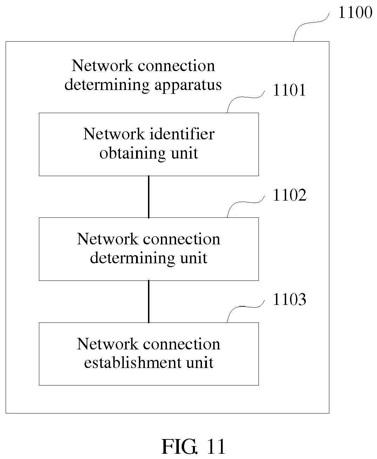

Based on the foregoing embodiments, an embodiment of the present invention further provides a network connection determining apparatus that is applied to a first terminal. The first terminal may use the method provided in the embodiment corresponding to the first terminal in FIG. 4. Referring to FIG. 11, a network connection determining apparatus 1100 includes a network identifier obtaining unit 1101 and a network connection determining unit 1102, and optionally, further includes a network connection establishment unit 1103.

The network identifier obtaining unit 1101 is configured to obtain an identifier of a network connected to a second terminal.

The network connection determining unit 1102 is configured to, when the identifier that is obtained by the network identifier obtaining unit 1101 and that is of the network connected to the second terminal is consistent with an identifier of a network to which the first terminal subscribes, determine that the first terminal can establish a connection to a network device by using the second terminal, where the network device is a device in the network connected to the second terminal.

Optionally, the network identifier obtaining unit 1101 is specifically configured to:
receive first information broadcast by the second terminal, where the first information includes the identifier of the network connected to the second terminal, and a packet format of the first information is based on a Bluetooth protocol or a Wireless Fidelity WiFi protocol;
convert the first information into second information, where a packet format of the second information is based on a cellular network protocol; and
obtain, by parsing the second information, the identifier of the network connected to the second terminal.

Optionally, the network connection determining apparatus 1100 further includes:
the network connection establishment unit 1103, configured to send a request message to the network device by using the second terminal, where the request message is used by the first terminal to request to establish a connection to the network device.

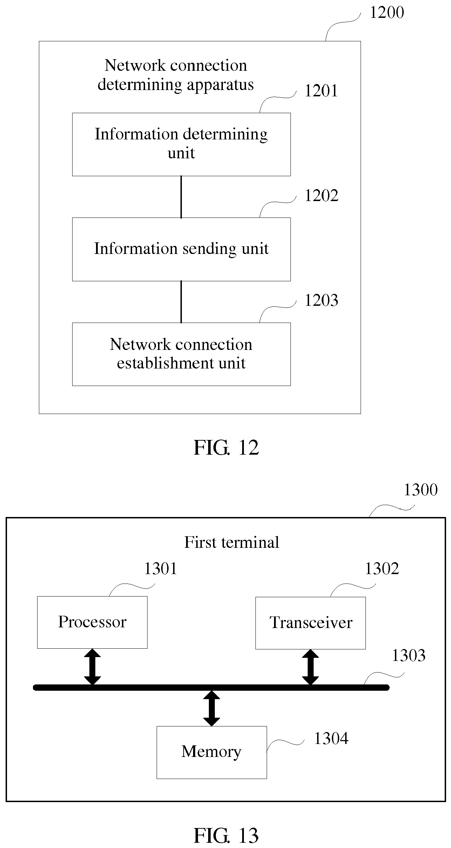

Based on the foregoing embodiments, an embodiment of the present invention further provides a network connection determining apparatus that is applied to a second terminal. The second terminal may use the method provided in the embodiment corresponding to the second terminal in FIG. 4. Referring to FIG. 12, a network connection determining apparatus 1200 includes an information determining unit 1201 and an information sending unit 1202, and optionally, further includes a network connection establishment unit 1203.

The information determining unit 1201 is configured to determine first information, where the first information includes an identifier of a network connected to the second terminal, the identifier of the network connected to the second terminal is used by a first terminal to determine that the first terminal can establish a connection to a network device by using the second terminal, and the network device is a device in the network connected to the second terminal.

The information sending unit 1202 is configured to broadcast the first information determined by the information determining unit 1201.

Optionally, the information determining unit 1201 is configured to:
receive third information sent by the network device, where the third information includes the identifier of the network connected to the second terminal, and a packet format of the third information is based on a cellular network protocol; and
convert the third information into the first information, where a packet format of the first information is based on a Bluetooth protocol or a Wireless Fidelity WiFi protocol.

Optionally, the network connection determining apparatus 1200 further includes:
the network connection establishment unit 1203, configured to forward, to the network device, a request message sent by the first terminal, where the request message is used by the first terminal to request to establish a connection to the network device.

It should be noted that unit division in the embodiments of the present invention is an example, and is merely logical function division, and there may be another division manner during actual implementation. In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software function unit, and is sold or used as an independent product, the integrated unit may be stored in a computer readable storage medium. Based on such understanding, the technical solutions of this application or a part contributing to the prior art, or all or a part of the technical solutions may be represented in a form of a software product. The computer software product is stored in a storage medium, and includes a plurality of instructions used to enable one computer device (which may be a personal computer, a server, a network device, or the like) or a processor (processor) to perform all or some steps of the method in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or a compact disc.

Based on the foregoing embodiments, the present invention further provides a first terminal. The first terminal may use the method provided in the embodiment corresponding to the first terminal in FIG. 3 or FIG. 4, and may be a device that is the same as a first terminal apparatus shown in FIG. 8 or FIG. 11. Referring to FIG. 13, a first terminal 1300 includes a processor 1301, a transceiver 1302, a bus 1303, and a memory 1304.

The processor 1301, the transceiver 1302, and the memory 1304 are interconnected by using the bus 1303. The bus 1303 may be a peripheral component interconnect (peripheral component interconnect, PCI for short) bus, an extended industry standard architecture (extended industry standard architecture, EISA for short) bus, or the like. The bus may be divided into an address bus, a data bus, a control bus, or the like. For ease of description, in FIG. 13, only one bold line is used for representation, but it does not mean that there is only one bus or one type of bus.

The processor 1301 in the first terminal 1300 corresponds to a unit having a processing function in the first terminal. The transceiver 1302 corresponds to a unit having a data receiving or sending function in the first terminal. The memory 1304 is configured to store a program and the like. Specifically, the program may include program code, and the program code includes a computer operation instruction. The memory 1304 may include a random access memory (random access memory, RAM), or may include a non-volatile memory (non-volatile memory), for example, at least one magnetic disk memory. The processor 1301 executes the application program stored in the memory 1304, to implement the foregoing communication link establishment method.

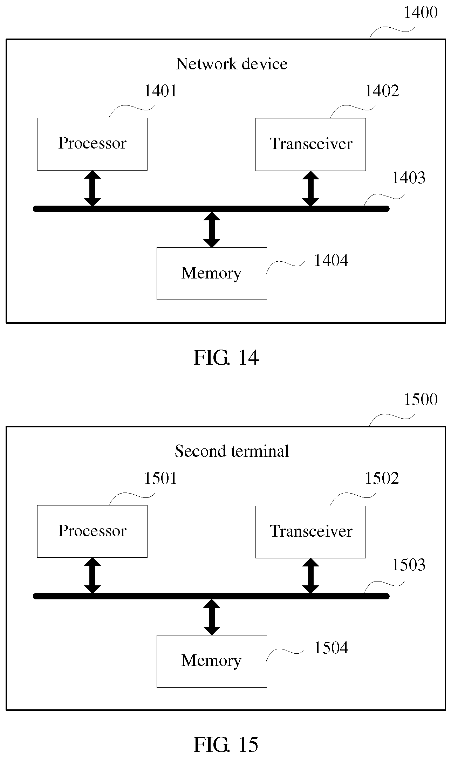

Based on the foregoing embodiments, the present invention further provides a network device. The network device may use the method provided in the embodiment corresponding to the network device in FIG. 3, and may be a device that is the same as the network device shown in FIG. 9. Referring to FIG. 14, a network device 1400 includes a processor 1401, a transceiver 1402, a bus 1403, and a memory 1404.

The processor 1401, the transceiver 1402, and the memory 1404 are interconnected by using the bus 1403. The bus 1403 may be a PCI bus, an EISA bus, or the like. The bus may be divided into an address bus, a data bus, a control bus, or the like. For ease of description, in FIG. 14, only one bold line is used for representation, but it does not mean that there is only one bus or one type of bus.

The processor 1401 in the network device 1400 corresponds to a unit having a processing function in the network device. The transceiver 1402 corresponds to a unit having a data receiving or sending function in the network device. The memory 1404 is configured to store a program and the like. Specifically, the program may include program code, and the program code includes a computer operation instruction. The memory 1404 may include a RAM, or may include a non-volatile memory, for example, at least one magnetic disk memory. The processor 1401 executes the application program stored in the memory 1404, to implement the foregoing communication link establishment method.

Based on the foregoing embodiments, the present invention further provides a second terminal. The second terminal may use the method provided in the embodiment corresponding to the second terminal in FIG. 3 and/or FIG. 4, and may be a device that is the same as a second terminal apparatus shown in FIG. 10 and/or FIG. 12. Referring to FIG. 15, a second terminal 1500 includes a processor 1501, a transceiver 1502, a bus 1503, and a memory 1504.

The processor 1501, the transceiver 1502, and the memory 1504 are interconnected by using the bus 1503. The bus 1503 may be a PCI bus, an EISA bus, or the like. The bus may be divided into an address bus, a data bus, a control bus, or the like. For ease of description, in FIG. 15, only one bold line is used for representation, but it does not mean that there is only one bus or one type of bus.

The processor 1501 in the second terminal 1500 corresponds to a unit having a processing function in the second terminal. The transceiver 1502 corresponds to a unit having a data receiving or sending function in the second terminal. The memory 1504 is configured to store a program and the like. Specifically, the program may include program code, and the program code includes a computer operation instruction. The memory 1504 may include a RAM, or may include a non-volatile memory, for example, at least one magnetic disk memory. The processor 1501 executes the application program stored in the memory 1504, to implement the foregoing communication link establishment method.

Although some preferred embodiments of the present invention have been described, a person skilled in the art can make changes and modifications to these embodiments once they learn the basic inventive concept without departing from the scope of the present invention as set forth in the following claims.

## Claims

1. A communication link establishment method, wherein the method comprises:
establishing (S301), by a smart wearable device, a connection to a base station of a cellular network via a relay device; and
determining (S303, S601), by the smart wearable device, link configuration information, and establishing (S303, S 602), based on the link configuration information, a first communication link with the relay device having a second communication link with the base station; wherein
the first communication link is a Wireless Fidelity, WiFi, communication link based on a first packet defining protocol and the second communication link is a cellular link based on a cellular network, second packet defining protocol; wherein the first communication link between the smart wearable device and the relay device and the second communication link between the relay device and the base station are both used by the smart wearable device to transmit a packet from the smart wearable device to the base station;
wherein in a process in which the smart wearable device transmits a packet to the base station, the smart wearable device and the relay device both have a packet conversion function, and the packet conversion function is to convert the packet between the first packet defining protocol and the second packet defining protocol.

2. The method according to claim 1, after the establishing, by the smart wearable device, the first communication link with the relay device, further comprising:
transmitting, by the smart wearable device, a packet to the base station by using the relay device.

3. The method according to claim 2, wherein the transmitting, by the smart wearable device, a packet to the base station by using the relay device comprises:
converting, by the smart wearable device, a packet according to the second packet defining protocol into a packet according to the first packet defining protocol; and
sending, by the smart wearable device, the packet according to the first packet defining protocol to the relay device through the first communication link, so that after converting the received packet according to the first packet defining protocol into the packet according to the second packet defining protocol, the relay device sends the packet according to the second packet defining protocol to the base station through the second communication link.

4. A communication link establishment method, comprising:
establishing, by a base station, a connection to a smart wearable device via a relay device, wherein the base station has a second communication link to the relay device; and
transmitting (S501), by the base station, configuration information to the smart wearable device, wherein the configuration information is used to establish (S504) a first communication link between the smart wearable device and the relay device; wherein
the first communication link is a Wireless Fidelity, WiFi, communication link based on a first packet defining protocol and the second communication link is a cellular link based on a cellular network, second packet defining protocol; and the first communication link and the second communication link are both used by the smart wearable device to transmit a packet to the base station via the relay device;
wherein in a process in which the smart wearable device transmits a packet to the base station via the relay device, the smart wearable device and the relay device both have a packet conversion function, and the packet conversion function is to convert the transmitted packet between a first packet defining protocol of the first communication link and a second packet defining protocol of the second communication link.

5. The method according to claim 4, wherein the establishing, by the base station, the connection to the smart wearable device by using the relay device comprises:
receiving, by the base station via the relay device, a request message sent by the smart wearable device, wherein the request message is used by the smart wearable device to request to establish the connection to the base station .

6. A smart wearable device (800), comprising:
a network connection unit (801), configured to establish a connection between the smart wearable device (800) and a base station via a relay device ; and
a link establishment unit (802), configured to, before the network connection unit establishes the connection between the smart wearable device (800) and the base station via the relay device, the relay device comprising a second communication link to the base station of a cellular network, determine link configuration information, and establish, based on the link configuration information, a first communication link between the smart wearable device (800) and the relay device; wherein
the first communication link is a Wireless Fidelity, WiFi, communication link based on a first packet defining protocol and the second communication link is a cellular link based on a cellular network, second packet defining protocol; and the first communication link and the second communication link are both used by the smart wearable device to transmit a packet to the base station by using the relay device;
the smart wearable device further comprising
a protocol adaptation unit (803), configured to, after the link establishment unit establishes the first communication link between the smart wearable device and the relay device, in a process in which the smart wearable device transmits a packet to the base station via the relay device, convert the transmitted packet between the second packet defining protocol and the first packet defining protocol and transfer the packet to outside of the smart wearable device.

7. The smart wearable device according to claim 6, further comprising:
a packet transmission unit (804), configured to transmit the packet to the base station via the relay device.

8. The smart wearable device according to claim 7, wherein the packet transmission unit (804) is specifically configured to:
convert a first packet generated by a first network module into a packet according to the first packet defining protocol; and
send the packet according to the first packet defining protocol to the relay device through the first communication link.

## Patentansprüche

1. Verfahren zur Herstellung einer Kommunikationsverbindung, wobei das Verfahren Folgendes umfasst:
Herstellen (S301), durch ein intelligentes tragbares Gerät, einer Verbindung zu einer Basisstation eines Mobilfunknetzes über ein Relais-Gerät; und
Bestimmen (S303, S601), durch das intelligente tragbare Gerät, von Verbindungskonfigurationsinformationen und Herstellen (S303, S602, basierend auf den Verbindungskonfigurationsinformationen, einer ersten Kommunikationsverbindung mit dem Relais-Gerät, das über eine zweite Kommunikationsverbindung mit der Basisstation verfügt; wobei die erste Kommunikationsverbindung eine auf einem ersten paketdefinierenden Protokoll basierende WiFi-Kommunikationsverbindung ("Wireless Fidelity", WiFi) und die zweite Kommunikationsverbindung eine auf einem zweiten paketdefinierenden Protokoll eines Mobilfunknetzes basierende Mobilfunkverbindung ist; wobei beide, die erste Kommunikationsverbindung zwischen dem intelligenten tragbaren Gerät und dem Relais-Gerät und die zweite Kommunikationsverbindung zwischen dem Relais-Gerät und der Basisstation, vom intelligenten tragbaren Gerät genutzt werden, um ein Paket vom intelligenten tragbaren Gerät zur Basisstation zu übertragen;
wobei in einem Verfahren, in welchem das intelligente tragbare Gerät ein Paket an die Basisstation überträgt, beide, das intelligente tragbare Gerät und das Relais-Gerät, über eine Paketumwandlungsfunktion verfügen, und die Paketumwandlungsfunktion das Paket zwischen dem ersten paketdefinierenden Protokoll und dem zweiten paketdefinierenden Protokoll konvertieren soll.

2. Verfahren nach Anspruch 1, welches, nach der Herstellung der ersten Kommunikationsverbindung mit dem Relais-Gerät durch das intelligente tragbare Gerät, außerdem Folgendes umfasst:
Übertragen, durch das intelligente tragbare Gerät, eines Pakets an die Basisstation durch Nutzung des Relais-Geräts.

3. Verfahren nach Anspruch 2, wobei das Übertragen, durch das intelligente tragbare Gerät, eines Pakets an die Basisstation durch Nutzung des Relais-Geräts Folgendes umfasst:
Konvertieren, durch das intelligente tragbare Gerät, eines Pakets gemäß dem zweiten paketdefinierenden Protokoll in ein Paket gemäß dem ersten paketdefinierenden Protokoll; und
Senden, durch das intelligente tragbare Gerät, des Pakets gemäß dem ersten paketdefinierenden Protokoll an das Relais-Gerät über die erste Kommunikationsverbindung, damit, nach dem Konvertieren des empfangenen Pakets gemäß dem ersten paketdefinierenden Protokoll in das Paket gemäß dem zweiten paketdefinierenden Protokoll, das Relais-Gerät das Paket gemäß dem zweiten paketdefinierenden Protokoll an die Basisstation über die zweite Kommunikationsverbindung sendet.

4. Verfahren zur Herstellung einer Kommunikationsverbindung, Folgendes umfassend:
Herstellen, durch eine Basisstation, einer Verbindung mit einem intelligenten tragbaren Gerät über ein Relais-Gerät, wobei die Basisstation über eine zweite Kommunikationsverbindung mit dem Relais-Gerät verfügt; und
Übertragen (S501), durch die Basisstation, von Konfigurationsinformationen an das intelligente tragbare Gerät, wobei die Konfigurationsinformationen dazu genutzt werden, eine erste Kommunikationsverbindung zwischen dem intelligenten tragbaren Gerät und dem Relais-Gerät herzustellen (S504); wobei
die erste Kommunikationsverbindung eine auf einem ersten paketdefinierenden Protokoll basierende WiFi-Kommunikationsverbindung ("Wireless Fidelity", WiFi) und die zweite Kommunikationsverbindung eine auf einem zweiten paketdefinierenden Protokoll eines Mobilfunknetzes basierende Mobilfunkverbindung ist; und wobei beide, die erste Kommunikationsverbindung und die zweite Kommunikationsverbindung, vom intelligenten tragbaren Gerät genutzt werden, um ein Paket über das Relais-Gerät an die Basisstation zu übertragen;
wobei in einem Verfahren, in welchem das intelligente tragbare Gerät über das Relais-Gerät ein Paket an die Basisstation überträgt, beide, das intelligente tragbare Gerät und das Relais-Gerät, über eine Paketumwandlungsfunktion verfügen, und die Paketumwandlungsfunktion das übertragene Paket zwischen einem ersten paketdefinierenden Protokoll der ersten Kommunikationsverbindung und einem zweiten paketdefinierenden Protokoll der zweiten Kommunikationsverbindung konvertieren soll.

5. Verfahren nach Anspruch 4, wobei das Herstellen, durch die Basisstation, der Verbindung mit dem intelligenten tragbaren Gerät durch Nutzung des Relais-Geräts Folgendes umfasst:
Empfangen, durch die Basisstation über das Relais-Gerät, einer vom intelligenten tragbaren Gerät gesendeten Anforderungsnachricht, wobei die Anforderungsnachricht vom intelligenten tragbaren Gerät genutzt wird, das Herstellen der Verbindung zur Basisstation anzufordern.

6. Intelligentes tragbares Gerät (800), Folgendes umfassend:
eine Netzverbindungseinheit (801), die dafür eingerichtet ist, über ein Relais-Gerät eine Verbindung zwischen dem intelligenten tragbaren Gerät (800) und einer Basisstation herzustellen; und
eine Verbindungsherstellungseinheit (802), die dafür eingerichtet ist, bevor die Netzverbindungseinheit über das Relais-Gerät die Verbindung zwischen dem intelligenten tragbaren Gerät (800) und der Basisstation herstellt, wobei das Relais-Gerät eine zweite Kommunikationsverbindung zur Basisstation eines Mobilfunknetzes umfasst, Verbindungskonfigurationsinformationen zu bestimmen, und, basierend auf den Verbindungskonfigurationsinformationen, eine erste Kommunikationsverbindung zwischen dem intelligenten tragbaren Gerät (800) und dem Relais-Gerät herzustellen; wobei
die erste Kommunikationsverbindung eine auf einem ersten paketdefinierenden Protokoll basierende WiFi-Kommunikationsverbindung ("Wireless Fidelity", WiFi) und die zweite Kommunikationsverbindung eine auf einem zweiten paketdefinierenden Protokoll eines Mobilfunknetzes basierende Mobilfunkverbindung ist; und wobei beide, die erste Kommunikationsverbindung und die zweite Kommunikationsverbindung, vom intelligenten tragbaren Gerät genutzt werden, um ein Paket durch Nutzung des Relais-Geräts an die Basisstation zu übertragen;
das intelligente tragbare Gerät außerdem eine Protokollanpassungseinheit (803) umfasst, die dafür eingerichtet ist, nachdem die Verbindungsherstellungseinheit die erste Kommunikationsverbindung zwischen dem intelligenten tragbaren Gerät und dem Relais-Gerät herstellt, in einem Verfahren, in dem das intelligente tragbare Gerät über das Relais-Gerät ein Paket an die Basisstation überträgt, das zwischen dem zweiten paketdefinierenden Protokoll und dem ersten paketdefinierenden Protokoll übertragene Paket zu konvertieren und das Paket nach außerhalb des intelligenten tragbaren Geräts zu übertragen.

7. Intelligentes tragbares Gerät nach Anspruch 6, außerdem umfassend:
eine Paketübertragungseinheit (804), die dafür eingerichtet ist, das Paket über das Relais-Gerät an die Basisstation zu übertragen.

8. Intelligentes tragbares Gerät nach Anspruch 7, wobei die Paketübertragungseinheit (804) im Besonderen für Folgendes eingerichtet ist:
Konvertieren eines von einem ersten Netzmodul erzeugten ersten Pakets in ein Paket gemäß dem ersten paketdefinierenden Protokoll; und
Senden des Pakets gemäß dem ersten paketdefinierenden Protokoll an das Relais-Gerät über die erste Kommunikationsverbindung.

## Revendications

1. Procédé d'établissement de liaison de communication, le procédé consistant :
à établir (S301), au moyen d'un dispositif portable intelligent, une connexion avec une station de base d'un réseau cellulaire par le biais d'un dispositif de relais ; et
à déterminer (S303, S601), au moyen du dispositif portable intelligent, des informations de configuration de liaison et à établir (S303, S602), sur la base des informations de configuration de liaison, une première liaison de communication avec le dispositif de relais ayant une seconde liaison de communication avec la station de base ; dans lequel
la première liaison de communication est une liaison de communication par fidélité sans fil, Wi-Fi, basée sur un premier protocole de définition de paquet et la seconde liaison de communication est une liaison cellulaire basée sur un second protocole de définition de paquet de réseau cellulaire ; dans lequel la première liaison de communication entre le dispositif portable intelligent et le dispositif de relais et la seconde liaison de communication entre le dispositif de relais et la station de base sont l'une et l'autre utilisées par le dispositif portable intelligent pour transmettre un paquet depuis le dispositif portable intelligent à la station de base ;
dans lequel, dans un processus dans lequel le dispositif portable intelligent transmet un paquet à la station de base, le dispositif portable intelligent et le dispositif de relais possèdent l'un et l'autre une fonction de conversion de paquet et la fonction de conversion de paquet est destinée à convertir le paquet entre le premier protocole de définition de paquet et le second protocole de définition de paquet.

2. Procédé selon la revendication 1, après l'établissement, par le dispositif portable intelligent, de la première liaison de communication avec le dispositif de relais, consistant en outre :
à transmettre, au moyen du dispositif portable intelligent, un paquet à la station de base en utilisant le dispositif de relais.

3. Procédé selon la revendication 2, dans lequel la transmission, par le dispositif portable intelligent, d'un paquet à la station de base en utilisant le dispositif de relais consiste :
à convertir, au moyen du dispositif portable intelligent, un paquet en fonction du second protocole de définition de paquet en un paquet en fonction du premier protocole de définition de paquet ; et
à envoyer, au moyen du dispositif portable intelligent, le paquet en fonction du premier protocole de définition de paquet au dispositif de relais par le biais de la première liaison de communication, de telle sorte qu'après la conversion du paquet reçu en fonction du premier protocole de définition de paquet en paquet en fonction du second protocole de définition de paquet, le dispositif de relais envoie le paquet en fonction du second protocole de définition de paquet à la station de base par le biais de la seconde liaison de communication.

4. Procédé d'établissement de liaison de communication consistant :
à établir, au moyen d'une station de base, une connexion avec un dispositif portable intelligent par le biais d'un dispositif de relais, dans lequel la station de base possède une seconde liaison de communication avec le dispositif de relais ; et
à transmettre (S501), au moyen de la station de base, des informations de configuration au dispositif portable intelligent, dans lequel les informations de configuration sont utilisées pour établir (S504) une première liaison de communication entre le dispositif portable intelligent et le dispositif de relais ; dans lequel
la première liaison de communication est une liaison de communication par fidélité sans fil, Wi-Fi, basée sur un premier protocole de définition de paquet et la seconde liaison de communication est une liaison cellulaire basée sur un second protocole de définition de paquet de réseau cellulaire ; et la première liaison de communication et la seconde liaison de communication sont l'une et l'autre utilisées par le dispositif portable intelligent pour transmettre un paquet à la station de base par le biais du dispositif de relais ;
dans lequel, dans un processus dans lequel le dispositif portable intelligent transmet un paquet à la station de base par le biais du dispositif de relais, le dispositif portable intelligent et le dispositif de relais possèdent l'un et l'autre une fonction de conversion de paquet et la fonction de conversion de paquet est destinée à convertir le paquet transmis entre le premier protocole de définition de paquet de la première liaison de communication et un second protocole de définition de paquet de la seconde liaison de communication.

5. Procédé selon la revendication 4, dans lequel l'établissement, par la station de base, de la connexion avec le dispositif portable intelligent en utilisant le dispositif de relais consiste :
à recevoir, au moyen de la station de base par le biais du dispositif de relais, un message de requête envoyé par le dispositif portable intelligent, dans lequel le message de requête est utilisé par le dispositif portable intelligent pour demander d'établir la connexion avec la station de base.

6. Dispositif portable intelligent (800) comprenant :
une unité de connexion réseau (801), configurée pour établir une connexion entre le dispositif portable intelligent (800) et une station de base par le biais d'un dispositif de relais ; et
une unité d'établissement de liaison (802), configurée, avant que l'unité de connexion réseau n'établisse la connexion entre le dispositif portable intelligent (800) et la station de base par le biais du dispositif de relais, le dispositif de relais comprenant une seconde liaison de communication avec la station de base d'un réseau cellulaire, pour déterminer des informations de configuration de liaison et pour établir, sur la base des informations de configuration de liaison, une première liaison de communication entre le dispositif portable intelligent (800) et le dispositif de relais ; dans lequel
la première liaison de communication est une liaison de communication par fidélité sans fil, Wi-Fi, basée sur un premier protocole de définition de paquet et la seconde liaison de communication est une liaison cellulaire basée sur un second protocole de définition de paquet de réseau cellulaire ; et la première liaison de communication et la seconde liaison de communication sont l'une et l'autre utilisées par le dispositif portable intelligent pour transmettre un paquet à la station de base en utilisant le dispositif de relais ;
le dispositif portable intelligent comprenant en outre :
une unité d'adaptation de protocole (803), configurée, après que l'unité d'établissement de liaison établit la première liaison de communication entre le dispositif portable intelligent et le dispositif de relais, dans un processus dans lequel le dispositif portable intelligent transmet un paquet à la station de base par le biais du dispositif de relais, pour convertir le paquet transmis entre le second protocole de définition de paquet et le premier protocole de définition de paquet et pour transférer le paquet à l'extérieur du dispositif portable intelligent.

7. Dispositif portable intelligent selon la revendication 6, comprenant en outre :
une unité de transmission de paquet (804), configurée pour transmettre le paquet à la station de base par le biais du dispositif de relais.

8. Dispositif portable intelligent selon la revendication 7, dans lequel l'unité de transmission de paquet (804) est spécifiquement configurée :
pour convertir un premier paquet généré par un premier module de réseau en un paquet en fonction du premier protocole de définition de paquet ; et
pour envoyer le paquet en fonction du premier protocole de définition de paquet au dispositif de relais par le biais de la première liaison de communication.
